# EUROPEAN PATENT APPLICATION

(11) **EP 3 699 224 A1**
(43) Date of publication of application: **26.08.2020**
(21) Application number: 19305204.0
(22) Date of filing: 20.02.2019
(51) Int. Cl.: C08K 5/03, C08K 5/16, C08K 5/42, C08L 51/06, C08L 51/08, H01B 3/44

(54) **SCORCH RETARDANT HALOGENATED FLAME RETARDANT COMPOUNDS AND ARTICLES MADE THEREFROM**

(71) Applicant: PolyOne Corporation, Avon Lake, OH 44012 (US)
(72) Inventor: ALRIC, Jérôme, 95310 CERGY (FR); AUVRAY, Fabien, 95310 CERGY (FR); TRONCHON, Matthieu, 5330 ASSESSE (BE)
(74) Representative: Winter, Brandl, Fürniss, Hübner, Röss, Kaiser, Polte - Partnerschaft mbB

(57) **Abstract**

A halogenated flame retardant polyethylene compound is disclosed containing at least one organic additive which presents in its molecular structure at least one nitrogen atom to serve as a scorch retardant to forestall premature crosslinking during manufacture of wire and cable insulation and/or jacketing, in order to obtain a flame retardant crosslinked polyethylene (XLPE), and especially when the XLPE material is obtained via an alkoxysilane condensation-hydrolysis step.

## Description

### FIELD OF THE INVENTION

This invention concerns the use of a nitrogen-containing additive as a scorch retardant additive during the process of making wire insulation or cable jacketing.

### BACKGROUND OF THE INVENTION

People benefit from plastic articles. From their invention in the mid-20th Century until the present, thermoplastic polymers have become the composition of many consumer products. Such products are relatively lightweight, sturdy, and corrosion resistant.

Wire and cable manufacturers often use polymers for insulation and sheathing, also known as jacketing.

One type of polymer insulation and jacketing relies upon the combination of a vinyl alkoxysilane - ethylene copolymer (e.g., Visico™ copolymer from Borealis) and a sulfonic acid derivative catalyst useful in a hydrolysis/condensation reaction (e.g., Ambicat™ catalyst also from Borealis). The result of the copolymer and catalyst should be a crosslinked polyethylene (XLPE) insulation or jacketing.

However, during the wire insulation process, a Visico™/ Ambicat™ compound has been found in certain instances to be vulnerable to premature crosslinking. Premature crosslinking often leads to extrusion defects (e.g., gels) on the surface of the insulated wire or jacketed cable.

Premature crosslinking vulnerability especially occurs when the production line has stopped for as little as five minutes. Surprisingly, it has been observed that such problem only occurs when a brominated flame retardant additive is included in the polymer compound to serve as wire insulation or cable jacketing polymeric material.

Moreover, it has been known that crosslinking of Visico™/ Ambicat™ copolymer/catalyst system can be triggered by temperature and moisture.

It is also known that a brominated system degrades into water when it is combined with antimony trioxide at an elevated temperature. Indeed, a halogenated additive and antimony trioxide actually work in synergy to delay the combustion process of polyolefins.

This chemical mechanism leads to a decrease of the propagation of the flame in limiting the oxygen level in the environment, by trapping the free radicals formed during the combustion process. The initial step, which releases water, takes place at around 240°C.

However, it can be assumed that the flame retardant system thermal degradation could start at a lower temperature such as the extrusion temperature process conditions (150-200°C temperature range) if the system is exposed during a prolonged period of time.

### SUMMARY OF THE INVENTION

The problems of in the art are solved by a halogenated flame retardant polyolefin compound, disclosed below, which is the combination of a conventional polymer compound described above and at least one organic additive which presents in its molecular structure at least one nitrogen atom and serves as a scorch retardant. Such polymer compound including the nitrogen-containing additive can be particularly used as a flame retardant masterbatch in wire and cable insulation and/or jacketing process, in order to obtain flame retardant crosslinked polyethylene (XLPE) wire and jacketing materials, and especially when the XLPE material is obtained via an alkoxysilane condensation-hydrolysis step typified by the Visico™/ Ambicat™ copolymer/catalyst system commercially available from Borealis.

Preferably, the polyolefin useful in the compound for insulating or jacketing material is a vinyl alkoxysilane - ethylene copolymer ready for crosslinking to make the XLPE into wire and cable insulation and jacketing.

Therefore, one aspect of the invention concerns including in a system of vinyl alkoxysilane - ethylene copolymer and hydrolysis/condensation catalyst a combination of halogenated flame retardant additive and nitrogen-containing scorch retardant additive. This combination of additives in the system results in a flame retardant system which does not activate a crosslinking process when the insulation material has been exposed to an excessive temperature for an excessive period of time. The excessive temperature can range from about 145°C to about 180°C. The excessive time can range from at least 2 minutes and likely at least 5 minutes. These excessive times and temperatures are quite likely to occur whenever a production line for wire insulation or cable jacketing is halted for parts changes and other routine maintenance activities or more complicated production disruptions.

For clarity, a "scorch retardant additive" is defined to be an additive containing at least one nitrogen atom and which neutralizes hydrobromic acid (HBr), which is released from the premature thermal degradation of the brominated additive when it reacts with antimony trioxide.

"Scorching" is also a term of art to identify the early, unwanted onset of crosslinking of a polymer from a thermoplastic morphology to a thermoset morphology.

Another aspect of the invention is the discovery that use of a scorch retardant additive does not impair the proper function of the vinyl alkoxysilane - ethylene copolymer in the presence of the hydrolysis/condensation catalyst to commence crosslinking of the insulation or jacketing after the extrusion step.

Another aspect of the invention is the discovery that the addition of the scorch retardant additive does not disrupt the flame retardancy properties of the polymer compound containing halogenated flame retardant additives.

Just as premature crosslinking is known, so is it known that some additives can deactivate the hydrolysis/condensation catalyst, which is a sulfonic acid derivative. Non-limiting examples of additives which can deactivate a sulfonic acid derivative are metal hydroxides (e.g., magnesium dihydroxide or aluminum trihydroxide - well known non-halogenated flame retardants); stearate lubricants; and some UV-stabilizers.

Another aspect of the invention is a flame retardant polymer polyethylene compound, comprising: (a) polyethylene copolymer selected from the group consisting of vinyl alkoxysilane - ethylene copolymer; methoxysilane grafted polyethylene; and combinations thereof; (b) silane-crosslinking catalyst; (c) halogenated flame retardant additive; and (d) an effective amount of nitrogen-containing scorch retardant additive relative to an amount of halogenated flame retardant to minimize premature crosslinking of the compound into crosslinked polyethylene during manufacture of wire insulation or cable jacketing as a result of exposure to excessive temperatures for excessive time during interruption of manufacture.

Another aspect of the invention is the polyethylene compound in the form of insulation for wire or jacketing for cable.

Another aspect of the invention is wire insulated by or cable jacketed by the polyethylene compound.

The embodiments of the invention follow.

### EMBODIMENTS OF THE INVENTION

### Silane Crosslinking Polyethylene Compounds for Wire and Cable Use

Broadly, the invention has applicability to any vinyl silane crosslinking polyethylene compound in which a halogenated flame retardant and antimony oxide are also present.

For example, and as explained above, this invention has particular use with a system of a vinyl alkoxysilane - ethylene copolymer and sulfonic acid derivative catalyst, such as sold by Borealis using the Visico™ and Ambicat™ brands, respectively. Any such system of vinyl alkoxysilane - ethylene copolymer and sulfonic acid derivative catalyst, now or hereafter commercially available, is a candidate for use in the present invention.

For example, other moisture cure silane crosslinking products also benefit from this invention. SIOPLAS™ branded two-part silane crosslinking system and MONOSIL™ branded one-part silane crosslinking system, both from INEOS, use methoxysilane grafted polyethylene, as do users of OnCap™ branded dry silane masterbatches from PolyOne for wire and cable applications. As long as the halogenated flame retardant and antimony oxide are also present, the problems in the art can be found to some extent.

Catalysts useful for the silane crosslinking reaction are tin salt catalysts, sulfonic acid derivative catalyst, and other silane-crosslinking catalysts.

The applicable silane crosslinking system under known procedures permits polymer in a non-crosslinked condition to be extruded around, over, or about a continuous moving cylinder of electrical wire or optical fiber to serve as insulation or jacketing or sheathing. Polymer is usually fed in molten form to the moving wire or cable using a cross-head die. Post-extrusion crosslinking to form XLPE polymer as that insulation or jacketing occurs by means of moisture in the form of heated water or steam or acid initiating the silane-crosslinking catalyst to trigger crosslinking of the reactive silane groups in the copolymer.

The efficient production of crosslinked wire insulation or crosslinked cable jacketing not only requires essentially no premature crosslinking but also requires essentially no delayed crosslinking. Thus, there needs to be a careful use of additives which discourage premature crosslinking, but not so much as to adversely affect the proper timing of the required post-extrusion crosslinking.

### Halogenated Flame Retardant Additive

Any halogenated flame retardant is a candidate for use wire and cable applications, which in turn can benefit from the insights of the present invention. Though chlorinated flame retardants are acceptable, brominated flame retardants are preferred in wire and cable applications. The following paragraph identifies known halogenated flame retardants which are commercially available.

Decabromodiphenyl Ether, 2,2',3,3',4,4',5,5',6,6'-Decabromodiphenyl ether (BDE-209); Decabromobiphenyl (decaBB); 2,2',3,4,4'-Pentabromodiphenyl ether (BDE-85); 2,2',3,4,4',5'-Hexabromodiphenyl ether (BDE-138); 2,3,4,4'-Tetrabromodiphenyl ether (BDE-66); 2',3,4,6'-Tetrabromodiphenyl ether/ 2,2',4,5'-Tetrabromodiphenyl ether (BDE-71/49); 2,2',4,4',6-Pentabromodiphenyl ether (BDE-100); 2,3',4,4',6-Pentabromodiphenyl ether (BDE-119); 2,2',4,4',5,6'-Hexabromodiphenyl ether (BDE-154); 2,2',3,4,4',5',6-Heptabromodiphenyl ether (BDE-183); 2',3,4,6'-Tetrabromodiphenyl ether/ 2,2',4,5'-Tetrabromodiphenyl ether (BDE-71/49); Hexabromocyclododecane (HBCD); Octabromobiphenyl (octaBB); Hexabromocyclododecane (HBCD); Pentabromodiphenyl ether (Penta-BDE); Octa-bromodiphenyl ether (Octa-BDE); Hexabromobiphenyl (hexaBB); 3,3',4,4'-Tetrabromodiphenyl ether (BDE-77); 2,4,4'-Tribromobiphenyl ether (BDE-28); 2,2',3,3',4,4',5,6'-Octabromodiphenyl ether (BDE-196); 2,2',4,4'-Tetrabromodiphenyl ether (BDE-47); 2,2',4,4',5-Pentabromodiphenyl ether (BDE-99); 2,2',3,3',4,4',5,5',6-Nonabromodiphenyl ether (BDE-206); 2,2',4,4',5,5'-Hexabromobiphenyl ether (BDB 153); Polychlorinated biphenyls (PCB); Polychlorinated biphenyls (PCB); Chlorinated paraffins; Tris(2-chloroethyl) phosphate (TCEP); Tris(1,3-dichloro-2-propyl)phosphate (TDCPP); 2,4,6-Tribromophenol; Ammonium bromide; 2-Hydroxy-propyl-2-(2-hydroxy-ethoxy)-ethyl-TBP; 2,4,6-tris(2,4,6-tribromophenoxy)-1,3,5-triazine (TTBP-TAZ); Bis-(2-ethylhexyl)-3,4,5,6-tetrabromo-phthalate (BEH-TEBP); Ethylene Bis-Tetrabromophthalimide; 1,2-Dibromo-4-(1,2-dibromoethyl)cyclohexane; 2,3-Dibromopropyl- 2,4,6-tribromophenyl ether (DPTE); 1,2-Bis(2,4,6-tribromo-phenoxy) ethane; TBBS-bis-(2,3-dibromo-propyl-ether); Hexahydro-1,3,5-tris(2,3-dibromopropyl)-1,3,5-triazine-2,4,6-trione; Ethylene-bis(5,6-dibromo-norbornane- 2,3-dicarboximide); Bis(methyl)tetrabromo-phtalate; Tetra-decabromo-diphenoxy-benzene; 2,4,6-Tribromoanisol (TBA); Pentabromo-phenol; Tribromo-styrene; 2,4-Dibromophenol; Poly-(m-phenylene methylphosphonate) (Fyrol PMP); TBPA, glycol-and propylene-oxide esters; Decabromodiphenyl ethane; Pentabromoethylbenzene; Pentabromotoluene; Tris (tri bromoneopentyl) phosphate; Bis(hexachlorocyclopentadieno) Cyclooctane (Dechlorane A); Chlorinated paraffins; Chlorinated paraffins; Chlorinated paraffins; Chlorinated paraffins; Tetrakis(hydroxymethyl)-phosphonium chloride (THPC); Tris(1-chloro-2-propyl) phosphate (TCPP); Tris(3-chloropropyl) phosphate; Tris(2-chloropropyl) phosphate; FR-122P (polymer); Brominated epoxy resin end-capped with tribromophenol; Brominated epoxy resin end-capped with tribromophenol; Brominated epoxy resin end-capped with tribromophenol; Tetrabromobisphenol A Bis (2,3-dibromopropyl) Ether; Tetrabromobisphenol A diallyl ether; 1,2,3-Tribromo-phenyl-allyl-ether; TBBA carbonate oligomer; Brominated Epoxy Polymers; 2,4,6-Tribromo-phenyl-allyl-ether; TBBA-bisphenol A-phosgene polymer; TBBA-dimethyl-ether; Tetrabromo-bisphenol S; TBBA-epichlorhydrin oligomer; TBBA bis-(2-hydroxy-ethyl-ether); Poly tribromo-styrene; Poly(pentabromobenzyl acrylate); Tetrabromophthalic anhydride; Tetrabromobisphenol A-tetrabromobisphenol A diglycidyl ether copolymer; Poly(2,6-dibromo-phenylene oxide); TBBA-TBBA-diglycidyl-ether oligomer; TBBA carbonate oligomer, 2,4,6-tribromo-phenol terminated; TBBPA (Tetrabromobisphenol A); Brominated Polystyrene; TBBA carbonate oligomer, phenoxy end capped; Chlorinated polymers and elastomers; Tetrachlorobisfenol A (TCBA); Chlorinated polymers and elastomers; TetrachlorobisphenolA; Pentabromochlorocyclohexane; Brominated Paraffins; BromoDiphenyloxide; Brominated Polystyrene; Bromophenylbenzoate; halogenated hydrocarbons; Brominated Epoxy; chlorenfic anhydride; Bromo-Chloro phthalic acid; and combinations thereof.

As is conventionally known, such halogenated flame retardant additive actually interacts with antimony trioxide in the presence of flame or intense heat in order to trap free radicals, which have been formed during the combustion process.

In the presence, unfortunately of elevated temperature when brominated flame retardants are used, release of hydrobromic acid (HBr) is actually observed. A release of HBr does not occur when the polymer compound containing brominated flame retardant material is extruded continuously during the wire insulation process or the cable jacketing process. However, when the production line must be stopped by the operator in order to change the wire gauge and extrusion tools (tip and die) or other known and unknown interruptions, the polymer compound is exposed at the extruder and die temperatures for at least 2 minutes and likely 5 minutes before the wire insulation manufacturing process is resumed. During such period of interruption of production at such elevated production temperatures, it has been found that a small quantity of the halogenated additive can start to degrade into a hydrogen halide acid, such as hydrobromic acid.

Basically during insulating and jacketing production using SIOPLAS™ or MONOSIL™ alkoxy silane-grafted polyethylene, it is known to be highly recommended to purge the extrusion line before each stop in order to remove any silane-grafted polyolefin and tin salt catalyst. Otherwise, the silane grafted polyolefin will start to prematurely crosslink along the extrusion screw, resulting in wire insulation defects.

Therefore, it is one of the key attributes of Visico™ / Ambicat™ system that ethylene vinyl methoxysilane copolymer is less prone to prematurely crosslink in the presence of sulfonic acid derivative catalyst. It is then generally possible to stop the wire insulation process, and re-start it without the necessity to purge before the line stop.

However, in the presence of halogenated flame retardant additive, wire insulation defects, also known as gels or scorch, are observed after the line has stopped in an elevated temperature condition.

Surprisingly, it has been observed that prematurely crosslinking could be inhibited or forestalled without adversely affecting the final crosslinking rate after extrusion when an effective amount of a nitrogen containing organic additive is determined for the system and then incorporated in the polymer compound.

### Scorch Retardant Additive

Nitrogen-containing additives qualify as candidates for use as the scorch retardant additive, such as any organic base derived from amine or amidine or other nitrogen-containing additive. Some of these additives are already known for other properties, such as anti-oxidants, hindered amine light stabilizers, or UV barrier additives. In the presence of degradation of the halogen flame retardant into hydrohalidic acid, such as HBr, the nitrogen-containing additives actually can neutralize any released HBr via an acid-base reaction. Thus, the nitrogen from the scorch retardant additive minimizes premature crosslinking if HBr is present, if the halogenated flame retardant starts to degrade during an interruption in extrusion of the polymer compound.

Non-limiting examples of scorch retardant additives are listed in the following four paragraphs, based on derivation.

Amine Derivatives: Aliphatic, cycloaliphatic, or arylaliphatic amines such as, methylamine, ethylamine, propylamine, isopropylamine, n-butylamine, isobutylamine, sec-butylamine, n-hexylamine, hexamethylene tetramine, cyclohexylamine, benzylamine, 2-ethylhexylamine, n-octylamine, n-decylamine, laurylamine or 2-methoxyethylamine, isophorone diamine, methylene dianiline, stearyl diethanolamine, coco bis(2-hydroxyethyl) amine, (hydrogenated tallow) bis (2-hydroxyethyl) amine; Hydroxylamine derivatives such as 2-amino-ethanol, 2-methylaminoethanol, 1-amino-2-propanol, 3-amino-1-propanol, 4-amino-butanol, 4-amino-2-butanol, 2-amino-2methylpropanol, 5-amino-1-pentanol, 6-amino-1-hexanol, 7-amino-1-heptanol, 8-amino-1-octanol, 10-amino-1-decanol, 12-amino-1-dodecanol, 4-(2-aminoethyl)-2-hydroxyethylbenzene, 3-aminomethyl-3,5,5-trimethyl-cyclohanol, N-(2-aminoethyl)-2-aminoethanol or N-(3-aminopropyl)-2-aminoethanol; Glycol derivatives such as 2-(2-aminoethoxy) ethanol, 2-(2-(2aminoethoxy) ethoxy) ethanol; alpha-(2-hydroxymethyl)-omega-(2-aminomethylethoxy) poly(oxy(methyl-1,2-ethanediyl) derivatives carrying a hydroxyl group and primary amino group; bisguanamines (such as adipoguanamine, 2-methylglutaroguanamine, and isoadipoguanamine); and combinations thereof.

Amidine derivatives: Diazabiclooctanes; N-alkyl-morpholines; 1,3-dimethylguanidine; 1,1,3,3-Tetramethyl guanidine (TMG); 1,3-Diphenylguanidine; 1,3-di-o-tolylguanidine; 1-butyl-2,3-diisoprpylguanidine; 1-butyl-2,3-diisopropyl-1methylguanidine; 1-butyl-2,3-dicyclohexylguanidine; 1-butyl-2,3-diclohexyl-1-methylguanidine; 1,2-dicyclohexyl-3-piperydilguanidine; 1,2-dicyclohexyl-3-pyrrolydylguanidine; Diazabyclononenes (DBN); Diaza-bicycloundecenes (DBU); and combinations thereof.

Antioxidants: Dianilinobenzene; Bis(Octylphenyl) Amine; N-Isopropyl-N'-phenyl-p-phenylenediamine (IPPD); N,N'-Bis(1-methylpropyl)-1,4-phenylenediamine; Diphenylamine; 4-((4,6-bis(octylthio)-1,3,5-triazin-2-yl)amino)-2,6-bis(1,1-dimethylethyl)-phenol; N1-(1,4-dimethylpentyl)-N4-phenyl-1,4-Benzenediamine; N,N'-bis(1,4-dimethylpentyl)-P-phenylenediamine; Bis [4-(2-phenyl-2-propyl)phenyl] amine; Trimethyl Dihydroquinoline Oligomer (TMQ); N-phenyl-Benzenamine reaction products with 2,4,4-trimethylpentene; Acetone diphenylamine; N,N',N"-tris[4-((1,4-dimethylpentyl)amino)phenyl]melamine;N,N',N"-tris {4-[(1,4-dimethylpentyl)amino]phenyl}-1,3,5-triazine-2,4,6-triamine;2,4,6-Tris-(N-1,4-dimethylpentyl-p-phenylenediamino)-1,3,5-triazine; Amines Bis(Hydrogenated Tallow Alkyl) Oxidized / Bis(Octadecyl) Hydroxylamine; and combinations thereof.

UV Stabilizers and Hindered Amine Light Stabilizers: Etodroxizine; Ensulizole; (Benzoic acid,4-[[(methylphenylamino)methylene]amino]-, ethyl ester); 4,4'-Hexamethylenebis(1,1-dimethylsemicarbazide); Drometrizol; Bis(2,2,6,6-tetramethyl-4-piperidinyl) sebacate; 4-hydroxy-2,6-tetra-methyl-1-piperidine-ethanol; N,N'-bis(2,2,6,6-tetramethylpiperidin-4-yl)hexane-1,6-diamine; 2,4,6-trichloro-1,3,5-triazine; 2,4,4-trimethylpentan-2-amine; N,N'"-1,2-ethanediylbis[N-[3-[[4,6- bis[butyl(1,2,2,6,6-pentamethyl- 4-piperidinyl)amino]-1,3,5-triazin-2-yl]amino]propyl]-N',N"-dibutyl-N',N"-bis (1,2,2,6,6-pentamethyl-4-piperidinyl)-1,3,5-triazine-2,4,6 triamine; and combinations thereof.

### Optional Other Additives

Other additives can be included in the polymer compound of the invention for their conventional purposes.

Those other conventional plastics additives can be added in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.elsevier.com), can select from many different types of additives for inclusion into the mixtures of the present invention.

Various primary and/or secondary lubricants such as oxidized polyethylene, paraffin wax, fatty acids, and fatty esters and the like can be utilized.

Thermal and ultra-violet light (UV) stabilizers can be utilized such as mixed metal stabilizers like Barium Zinc and Calcium Zinc, and lead stabilizers (tri-basic lead sulfate, di-basic lead phthalate, for example). Secondary stabilizers may be included for example a metal salt of phosphoric acid, polyols, and epoxidized oils. Specific examples of salts include watersoluble, alkali metal phosphate salts, disodium hydrogen phosphate, orthophosphates such as mono-, di-, and tri-orthophosphates of said alkali metals, alkali metal polyphosphates, -tetrapolyphosphates and -metaphosphates and the like. Polyols such as sugar alcohols, and epoxides such as epoxidized soybean oil can be used.

In addition, antioxidants such as phenolics, BPA, BHT, BHA, various hindered phenols and various inhibitors like substituted benzophenones can be utilized.

Various processing aids, fillers, pigments, flame retardants and reinforcing materials can also be utilized.

Adjustment of melt viscosity can be achieved as well as increasing melt strength by employing commercial fluorinated process aids Dynamar™ product range from DYNEON.

Examples of fillers include calcium carbonate, clay, silica and various silicates, talc, carbon black and the like. Reinforcing materials include glass fibers, polymer fibers and cellulose fibers. Also, flame retardant, antimony trioxides, magnesium oxides and zinc borates can be added to boost the flame retardancy of the polyethylene. Examples of various pigments include titanium dioxide, carbon black and the like. Mixtures of fillers, pigments and/or reinforcing materials also can be used.

Non-limiting examples of other optional additives include adhesion promoters; biocides (antibacterials, fungicides, and mildewcides), antifogging agents; anti-static agents; bonding, blowing and foaming agents; dispersants; fillers and extenders; smoke suppressants; impact modifiers; initiators; lubricants; micas; pigments, colorants and dyes; plasticizers; processing aids; release agents; silanes, titanates and zirconates; slip and antiblocking agents; stabilizers; stearates; ultraviolet light absorbers; viscosity regulators; waxes; and combinations of them.

The discovery of the formation of hydrogen halide acid during wire and cable production results in many possibilities of combinations of halogen flame retardants and scorch resistant additives. In any polymer compound being formulated as wire insulation or cable jacketing, the amount of halogenated flame retardant additive is closely related to the chemical structure of the additive and its molecular weight.

Likewise, the amount of scorch retardant additive is closely related to the proper nitrogen additive chemical structure, its molecular weight and its basicity, its ability to react more or less efficiently with the hydrogen halide acid, such as hydrobromic acid (HBr).

For those reasons, understanding, from this explanation, the necessity of including a scorch retardant additive in the polymer compound to combat generation of hydrogen halide acid permits a person of ordinary skill in the art without undue experimentation to formulate a polymer compound for wire insulation or cable jacketing which can counteract, via a scorch retardant additive, generation of the hydrogen halide acid, such as hydrobromic acid from use of brominated flame retardants in the polymer compound.

### Processing

The preparation of mixtures of the present invention is as follows. The compound of the present can be made in batch or continuous melt mixing operations.

Temperatures for melt-mixing the ingredients range from about 140°C to about 250°C and preferably from about 140°C to about 220°C. Durations for melt-mixing the ingredients range from about 20 seconds to about 60 seconds and preferably from about 30 seconds to about 45 seconds. Equipment used can be a continuous compounder such as a twin screw extruder or a Buss™ co-kneader.

For laboratory testing, the compound produced on batch mixer are re-melted and molded into test samples of size and shape dictated by the standardized test, as further explained in the Examples.

For commercial use, conventional wire and cable cross-head dies are used to form the molten mixture into a covering for the wire or cable.

Extrusion techniques are well known to those skilled in the art of thermoplastics polymer engineering. Without undue experimentation but with such references as "Extrusion, The Definitive Processing Guide and Handbook" published by Plastics Design Library (www.elesevier.com), one can make extruded articles of any profile using compounds of the present invention.

### USEFULNESS OF THE INVENTION

Compounds of the present invention are indicated for use as coverings (e.g., insulation or jacketing) over wire or cable, whether metallic or optical.

Any elongated material suitable for communicating, transferring or other delivering energy of electrical, optical or other nature is a candidate for the core of the wire or cable of the present invention. Non-limiting examples are metals such as copper or aluminum or silver or combinations of them; ceramics such as glass; and optical grade polymers, such as polycarbonate.

Regardless of the material used as the core to transport energy, the polymeric melt mixture then serves as the insulation sleeve or the jacketing cover or both for use in risers or plenums in buildings needing electrical power wires or cables or fiber optic communication wires or cables. Preferably, the compound serves as outdoor cable (overhead cables such as AsXsn cables).

Formation of a wire or cable utilizes conventional techniques known to those having ordinary skill in the art, without undue experimentation. Typically, the core or cores of the wire or cable is/are available along one axis and molten thermoplastic compound is delivered to a specific location using a cross head extrusion die along that axis from an angle ranging from 30 degrees to 150 degrees, with a preference for 90 degrees. Most commonly, the wire is moving along that one axis, in order that delivery of the molten thermoplastic compound to that specific location coats the wire or cable or combination of them or plurality of either or both of them, whereupon cooling forms the insulation or jacket concentrically about the wire or cable. The most common equipment employed is a subset of extrusion equipment called cross head extrusion which propels the core or cores past an extruder dispensing molten thermoplastic compound at approximately 90° to the axis of the moving wire or cable core or cores undergoing cross head extrusion. It is contemplated that polymer compounds of the present invention can be used as "drop in replacements" for conventional wire and cable covering using conventional draw-down ratios.

As explained previously, the compound of the invention can be employed as insulation or jacketing of any number of wire or cable structures for transmission of electrical, optical, or other energy. A non-limiting example of a wire or cable of the present invention is a fiber optic cable. Typically, a fiber optic cable comprises multiple fiber optic bundles surrounded by a single layer of polymer compound as a covering.

The amount of polymer compound used in a wire or cable covering is often identified by a regulation, an industry standard, or a commercial listing service. One example of flame testing is IEC EN 60332-1-2.

Further evidence of the invention is found in the following examples based on the following test methods.

### EXAMPLES

Table 1 shows all of the ingredients used to make the Comparative Examples and Examples.

| **Table 1** | | |
|---|---|---|
| **Ingredients** | | |
| **Ingredient Name** | **Purpose** | **Brand Name** |
| Ethylene vinyl silane copolymer | Base resin | VISICO™ LE 4423 (Borealis) |
| Sulfonic acid derivative catalyst | Hydrolysis /Condensation Catalyst | AMBICAT™ LE 4472 (Borealis) |
| Decabromodiphenyl ethane | Flame retardant additive | SAYTEX 8010 (Albemarle) |
| Antimony trioxide | Flame retardant additive | Commodity |
| 1,1,3,3-Tetramethylguanidine | Scorch retardant additive | TMG (Lonza) |
| Hexamethylene tetramine | Scorch retardant additive | HMT (Metadynea) |
| Trimethyl Dihydroquinoline Oligomer (TMQ) | Scorch retardant additive | Naugard Q (Addivant) |
| Tricalcium Citrate | Acid scavenger | Tricalcium Citrate (Dr. Paul Lohmann) |
| Hydrotalcite | Acid Scavenger | Hycite 713® (Clariant) |

### Preparation of Flame Retardant Masterbatch I

Flame retardant masterbatch I was prepared by mixing on twin screw extruder 40% by weight of LDPE (MFI range 6.5-9.5 @ 190°C/2.16kg-10 min) with 60% by weight of a brominated flame retardant/antimony trioxide commercially available from PolyOne under the brand OnCap™ and product number FR PE2812A.

### Comparative Example A

192.5 g of VISICO™ LE4423 copolymer from Borealis (82% by weight), and 25.8g of Masterbatch I (11% by weight) were mixed in a Brabender internal mixer at 120°C with screw speed of 5 rpm. When the blend of copolymer and Masterbatch I was homogeneous (after 10 minutes), 16.4 g of Ambicat™ LE4472 catalyst from Borealis (7% by weight) was added. After 36 minutes, 20g of ice water was added, and the evolution of changes to the torque was measured. The increase in torque to more than 50Nm indicated that a crosslinking speed higher than 0.14 Nm/s was measured.

### Comparative Example B

The formulation of Comparative Example A but with the concurrent addition of 16.4 g of Ambicat™ LE4472 from Borealis (7% by weight), was mixed in a Brabender internal mixer at 170°C for 10 minutes. The screw speed was 5 rpm. The internal mixer was stopped, and the internal chamber was opened. A first sample A was collected from the internal mixer chamber. The internal chamber of the internal mixer was then closed again, but the internal mixer was kept stopped for 5 minutes. A second sample B was then collected from the internal mixer chamber.

Samples A and B were hot pressed at 150°C into a very thin polymer plate. Sample A displayed a smooth surface aspect. This observation confirmed that no premature crosslinking occurred during the mixing step of Masterbatch I with the VISICO™/AMBICAT™ polymer system.

However, Sample B displayed showed some inclusion at its surface, confirming that premature crosslinking had occurred during or after the 5 minutes stoppage.

### Comparative Examples C-E and Example 1

The evaluation followed the same procedure as with Comparative Example B, except that Tetramethylguanidine (TMG) was added into the formulation of Comparative Example B at four different amounts ranging from 50 - 125 ppm.

To be successful, the example must not impede the production of the wire insulation but also perform as designed during and after a line stop. Thus, both test types must be validated affirmatively according to the Sample A - Sample B procedure explained with respect to Comparative Example B.

Table 2 shows the results that more than 50 ppm and less than 120 ppm, preferably about 100 ppm of TMG is necessary for validation.

| **Table 2** | | | | |
|---|---|---|---|---|
| **Example** | **Test Type** | **TMG (ppm)** | **Observations** | **Validation** |
| C | Standard test | 50 | Well crosslinked speed = 0,15 Nm/s | Yes |
| C | Line stop simulation | 50 | Not crosslinked before stop | No |
| | | | Crosslinked after stop | |
| D | Standard test | 125 | Crosslinked too slow | No |
| | | | speed = 0,9 Nm/s | |
| D | Line stop simulation | 125 | Not crosslinked before stop | Yes |
| | | | Not crosslinked after stop | |
| E | Standard test | 120 | Crosslinked too slowly | No |
| | | | speed = 0,10 Nm/s | |
| E | Line stop simulation | Not tested because of the crosslinking speed | / | / |
| 1 | Standard test | 100 | Well crosslinked speed = 0,15 Nm/s | Yes |
| 1 | Line stop simulation | 100 | Not crosslinked before stop | Yes |
| | | | Not crosslinked after stop | |

### Comparative Examples F-H and Example 2

The evaluation followed the same procedure as with Comparative Example B, except that Hexamethylenetetramine (HMT) was added separately into the formulation of Comparative Example B at four different amounts ranging from 35 - 128 ppm. Table 3 shows the results that less than 40 ppm of HMT is necessary for validation.

| **Table 3** | | | | |
|---|---|---|---|---|
| **Example** | **Test Type** | **HMT (ppm)** | **Observations** | **Validation** |
| F | Standard test | 128 | No crosslinking | No |
| F | Line stop simulation | Not tested because of the non-crosslinking | / | / |
| G | Standard test | 64 | No crosslinking | No |
| G | Line stop simulation | Not tested because of the non-crosslinking | / | / |
| H | Standard test | 40 | Crosslinked too slowly speed = 0,09 Nm/s | No |
| H | Line stop simulation | Not tested because of the crosslinking speed | / | / |
| 2 | Standard test | 35 | Well crosslinked speed = 0,16 Nm/s | Yes |
| 2 | Line stop simulation | 35 | Not crosslinked before stop Not crosslinked after stop | Yes |

### Preparation of Flame Retardant/Scorch Retardant Masterbatch II

A new Masterbatch II was prepared according to the same ingredients and processing conditions as Masterbatch I above, except that the new Masterbatch II also contained 1000 ppm of HMT.

### Comparative Examples I-J and Example 3

Table 4 shows the results when a masterbatch of both flame retardant additive and scorch retardant additive are in the same masterbatch. Surprisingly, a concentration of 35 ppm HMT via Masterbatch II is not enough in order to neutralize acid release during and after a line stop. This result caused a reassessment of the HMT being in the range above 45 ppm, preferably as least 55 ppm.

| **Table 4** | | | | |
|---|---|---|---|---|
| **Example** | **Test Type** | **HMT (via Masterbatch II) (ppm)** | **Observations** | **Validation** |
| I | Standard test | 35 | Well crosslinked speed = 0,14 Nm/s | Yes |
| I | Line stop simulation | 35 | Not crosslinked before stop Crosslinked after stop | No |
| J | Standard test | 45 | Well crosslinked speed = 0,14 Nm/s | Yes |
| J | Line stop simulation | 45 | Not crosslinked before stop Crosslinked after stop | No |
| 3 | Standard test | 55 | Well crosslinked speed = 0,14 Nm/s | Yes |
| 3 | Line stop simulation | 55 | Not crosslinked before stop Not crosslinked after stop | Yes |

### Comparative Examples K-N and Example 4

Sample evaluation followed the same procedure as with example 2, except that TMG was replaced by Trimethyl Dihydroquinoline Oligomer (TMQ). Table 5 shows the results that TMQ provides a scorch retardant effect when its concentration is between from about 20 to less than 40 ppm, preferably about 21 ppm.

| **Table 5** | | | | |
|---|---|---|---|---|
| **Example** | **Test Type** | **TMQ (ppm)** | **Observations** | **Validation** |
| K | Standard test | 130 | Crosslinked too slow | No |
| K | Line stop simulation | Not tested because of the non-crosslinking | / | / |
| L | Standard test | 100 | Crosslinked too slow | No |
| L | Line stop simulation | Not tested because of the non-crosslinking | / | / |
| M | Standard test | 64 | Crosslinked too slow | No |
| M | Line stop simulation | Not tested because of the crosslinking speed | / | / |
| N | Standard test | 42 | Crosslinked too slow | No |
| N | Line stop simulation | Not tested because of the crosslinking speed | / | / |
| 4 | Standard test | 21 | Well crosslinked speed = 0,14 Nm/s | Yes |
| 4 | Line stop simulation | 21 | Not crosslinked before stop Not crosslinked after stop | Yes |

### Preparation of Flame Retardant/Scorch Retardant Masterbatch III

A new Masterbatch III was prepared according to the same ingredients and processing conditions as Masterbatch I above, except that the new Masterbatch III also contained 1000 ppm of TMQ.

### Comparative Examples O-P and Examples 5-6

Table 6 shows the results when a masterbatch of both flame retardant additive and scorch retardant additive are in the same masterbatch. Surprisingly, a concentration of about 10-15 ppm TMQ via Masterbatch III is enough in order to neutralize acid release during and after a line stop.

| **Table 6** | | | | |
|---|---|---|---|---|
| **Example** | **Test Type** | **TMQ (via Masterbatch III) (ppm)** | **Observations** | **Validation** |
| O | Standard test | 30 | Crosslinked too slow | No |
| O | Line stop simulation | Not tested because of the non-crosslinking | / | / |
| P | Standard test | 20 | Crosslinked (limit) speed = 0,12 Nm/s | No |
| P | Line stop simulation | Not tested because of the non-crosslinking | / | / |
| 5 | Standard test | 10 | Well crosslinked speed = 0,14 Nm/s | Yes |
| 5 | Line stop simulation | 10 | No crosslinked before stop No crosslinked after stop | Yes |
| 6 | Standard test | 15 | Well crosslinked speed = 0,14 Nm/s | Yes |
| 6 | Line stop simulation | 15 | No crosslinked before stop No crosslinked after stop | Yes |

### Comparative Examples Q-Y

Sample evaluation follows the same procedure as with Example 1, except that TMG was replaced by tricalcium citrate, an acid scavenger. Table 7 shows no concentration tested was appropriate for validation. This result shows the unexpected performance of the scorch retardant additives exemplified in Examples 1-6 above.

| **Table 7** | | | | |
|---|---|---|---|---|
| **Example** | **Test Type** | **Tricalcium citrate (ppm)** | **Observations** | **Validation** |
| Q | Standard test | 34 | Crosslinked too slow | No |
| Q | Line stop simulation | Not tested because of the non-crosslinking | / | / |
| R | Standard test | 28 | Crosslinked too slow | No |
| R | Line stop simulation | Not tested because of the non-crosslinking | / | / |
| S | Standard test | 17 | Crosslinked too slow | No |
| S | Line stop simulation | Not tested because of the non-crosslinking | / | / |
| T | Standard test | 50 | Crosslinked too slow | No |
| T | Line stop simulation | Not tested because of the non-crosslinking | / | / |
| U | Standard test | 40 | Crosslinked too slow | No |
| U | Line stop simulation | Not tested because of the non-crosslinking | / | / |
| V | Standard test | 35 | Crosslinked too slow | No |
| V | Line stop simulation | Not tested because of the non-crosslinking | / | / |

### Comparative Examples W-X

Sample evaluation follows the same procedure as with Example 1, except that TMG was replaced by Hycite® 713 hydrotalcite, an acid scavenger. Table 8 shows neither concentration tested was appropriate for validation. This result shows the unexpected performance of the scorch retardant additives exemplified in Examples 1-6 above.

| **Table 8** | | | | |
|---|---|---|---|---|
| **Example** | **Test Type** | **Hycite 713® hydrotalcite (ppm)** | **Observations** | **Validation** |
| W | Standard test | 21 | Crosslinked too slow | No |
| W | Line stop simulation | Not tested because of the non-crosslinking | / | / |
| X | Standard test | 9 | Crosslinked too slow | No |
| X | Line stop simulation | Not tested because of the non-crosslinking | / | / |

Without undue experimentation and with the benefit of these 7 Tables of data of 24 Comparative Examples and 6 Examples investigating 3 different scorch retardants, a person of ordinary skill in the art can determine the effective amount of scorch retardant additive to be used with a conventional amount of halogenated flame retardant to minimize any premature crosslinking of a system of a silane crosslinking polyethylene compound to make XLPE, especially a vinyl alkoxysilane - ethylene copolymer and a sulfonic acid derivative catalyst.

Care should be taken to understand that the effective amount of scorch retardant may be different depending on whether the scorch retardant is added to the polymer compound together in a single masterbatch with the halogenated flame retardant or separately as two different masterbatches.

The invention is not limited to the above embodiments. The claims follow.

## Claims

1. A flame retardant polyethylene compound, comprising:
(a) polyethylene copolymer selected from the group consisting of vinyl alkoxysilane - ethylene copolymer; methoxysilane grafted polyethylene; and combinations thereof;
(b) silane-crosslinking catalyst;
(c) halogenated flame retardant additive; and
(d) an effective amount of nitrogen-containing scorch retardant additive relative to an amount of halogenated flame retardant to minimize premature crosslinking of the compound into crosslinked polyethylene during manufacture of wire insulation or cable jacketing as a result of exposure to excessive temperatures for excessive time during interruption of manufacture.

2. The polyethylene compound of Claim 1, wherein the polyethylene copolymer is an ethylene vinyl alkoxysilane copolymer and wherein the catalyst is a sulfonic acid derivative hydrolysis/condensation catalyst.

3. The polyethylene compound of Claim 1, wherein the polyethylene copolymer is methoxysilane grafted polyethylene and wherein the catalyst is a tin salt catalyst.

4. The polyethylene compound of Claim 1 or Claim 2, further comprising antimony trioxide.

5. The polyethylene compound of Claim 4, wherein the halogenated flame retardant additive is decabromodiphenyl ethane.

6. The polyethylene compound of Claim 5, wherein the scorch retardant additive is selected from the group consisting of 1,1,3,3-tetramethylguanidine (TMG), hexamethylene tetramine (HMT), trimethyl dihydroquinoline oligomer (TMQ), and combinations thereof.

7. The polyethylene compound of Claim 6, wherein the scorch retardant additive is TMG present in the polyethylene compound at more than 50 ppm and less than 120 ppm.

8. The polyethylene compound of Claim 6, wherein the scorch retardant additive is HMT present in the polyethylene compound at about 55 ppm.

9. The polyethylene compound of Claim 6, wherein the scorch retardant additive is TMQ present in the polyethylene compound at about 21 ppm.

10. The polyethylene compound of Claim 1, wherein the scorch retardant additive is selected from the group consisting of amine derivatives, amidine derivatives, antioxidants, UV stabilizers, hindered amine light stabilizers, and combinations thereof.

11. The polyethylene compound of Claim 1 or Claim 5, wherein the excessive temperature ranges from about 145°C to about 180°C and the excessive time exceeds at least two minutes.

12. The polyethylene compound of Claim 1 or Claim 5 or Claim 11 in the shape of insulation for wire or jacketing for cable.

13. A wire or cable covering, comprising the compound of Claim 1 or Claim 5 or Claim 11.

14. The wire or cable of Claim 13, wherein the wire or cable has a transmission core of optical fiber.

15. The wire or cable of Claim 13, wherein the wire or cable has a transmission core of metal wire.
